# EUROPÄISCHE PATENTSCHRIFT

(11) **EP 3 552 743 B1**
(45) Veröffentlichungstag und Bekanntmachung des Hinweises auf die Patenterteilung: **22.06.2022**
(21) Anmeldenummer: 19158265.9
(22) Anmeldetag: 20.02.2019
(51) Int. Cl.: B23F 19/10

(54) **VORRICHTUNG UND VERFAHREN ZUR ANFASBEARBEITUNG EINES VERZAHNTEN WERKSTÜCKS**
DEVICE AND METHOD FOR CHAMFERING A TOOTHED WORKPIECE
DISPOSITIF ET PROCÉDÉ DE CHANFREINAGE D'UNE PIÈCE DENTÉE

(30) Priorität: 11.04.2018 DE 102018108622
(43) Veröffentlichungstag der Anmeldung: 16.10.2019
(73) Patentinhaber: Liebherr-Verzahntechnik GmbH, 87437 Kempten (DE)
(72) Erfinder: Weixler, Johannes, 87471 Durach (DE)
(74) Vertreter: Behr, Wolfgang

(56) Entgegenhaltungen:
- EP-A1- 2 514 546
- EP-A1- 3 012 056
- EP-A2- 2 705 919
- EP-B1- 2 694 239
- EP-B1- 3 013 505
- DD-A- 38 465
- DE-A1- 10 113 653
- DE-A1-102013 003 804
- DE-C- 929 224
- JP-A- S5 531 571
- US-A- 3 426 485
- OLIVER WINKEL: "Anfasen von Verzahnungen Stirnradherstellung, Verfahrensintegration, Komplettbearbeitung", WERKSTATT + BETRIEB, CARL HANSER VERLAG, MÜNCHEN DE, Bd. 148, Nr. 6, 1. Juni 2015 (2015-06-01), Seiten 40-44, XP001595528, ISSN: 0043-2792

## Beschreibung

Die vorliegende Erfindung betrifft eine Vorrichtung zur Anfasbearbeitung mindestens zweier Kanten eines verzahnten Werkstücks gemäß dem Oberbegriff des unabhängigen Anspruchs 1.

Insbesondere kann es sich bei dem Anfasfräser um einen Chamfer-Cut-Fräser handeln. Die Erfindung betrifft ferner ein Verzahnbearbeitungszentrum mit einer derartigen Vorrichtung und ein Verfahren zur Anfasbearbeitung mindestens zweier Kanten des verzahnten Werkstücks.

Bei der Bearbeitung von Werkstücken zur Herstellung einer Verzahnung auf dem Werkstückrohling entstehen scharfkantige Materialüberstände an den bearbeiteten Werkstückkanten. Diese als Grate bezeichneten Überstände müssen durch Entgraten der Kanten der Verzahnung entfernt werden, da sie in den Folgeprozessen stören bzw. beim manuellen Teilhandling für den Maschinenbediener eine Verletzungsgefahr darstellen. Zusätzlich werden die Kanten der Verzahnung häufig noch mit speziellen Schutzanfasungen versehen.

Das Anfasen der Werkstücke erfolgt üblicherweise durch speziell angepasste Anfas-Werkzeuge im Anschluss an die Herstellung der Verzahnung auf dem Werkstückrohling. Für diesen Anfasprozess gibt es mehrere Verfahren nach dem Stand der Technik. In der Serienfertigung werden vor allem die Verfahren Drückentgraten gemäß der DE 8328237 A (siehe auch EP 2 694 239 B1) sowie Anfasfräsentgraten gemäß der DE 20320294 A sowie der DE 202007016740 A verwendet.

Druckschrift JP S 55031571 A zeigt eine Vorrichtung zur Anfasbearbeitung mindestens zweier Kanten eines verzahnten Werkstücks gemäß dem Oberbegriff von Anspruch 1.

Der Einsatz zweier Fingerfräser ist aus der DE 929 224 C bekannt.

Die DE 20320294 A zeigt dabei das Anfasfräsentgraten mit einem sogenannten Chamfer-Cut-Fräser. Ein solcher Chamfer-Cut-Fräser ist ein scheibenförmiges Anfaswerkzeug, welches am Umfang Schneidzähne und Spannuten aufweist, bevorzugt mit jeweils gleichem Umfangsabstand. Die Schneidzähne haben einen in Umfangsrichtung schraubenlinienförmigen Verlauf. Der Chamfer-Cut-Fräser ist mehrgängig, wobei pro Gang ein Zahn vorgesehen ist. Die an der in Drehrichtung vorderen Seite der Zähne ausgebildeten Schneidkanten liegen jedoch auf einem gemeinsamen Flugkreis.

Die oben genannten Anfas-Verfahren werden üblicherweise zum Anfasen von Werkstücken mit einer Außenverzahnung eingesetzt, beispielsweise indem das Anfas-Werkzeug zusammen mit dem Fräswerkzeug auf dem gleichen Werkzeugdorn aufgespannt und nach dem Fräsvorgang mit den Kanten der Verzahnung in Eingriff gebracht wird. Aus der DE 10 2013 015 240 A1 ist es weiterhin bekannt, eine Anfas-Fräs-Station einzusetzen, bei welcher als einzige Werkzeuge in der Werkzeugspindel Anfasfräser, insbesondere Chamfer-Cut-Fräser, eingesetzt werden.

Allerdings besteht bei der Anfasfräsbearbeitung mit Anfasfräsern, insbesondere mittels eines Chamfer-Cut-Verfahrens, die Problematik, dass keine Störkonturen in der Nähe der zu bearbeitenden Zahnkante vorhanden sein dürfen, da sich ein nicht unerheblicher Teil des Flugkreises der Fräserzähne oberhalb bzw. unterhalb der Stirnseite der Verzahnung, sowie innerhalb des Fusskreises der Verzahnung, deren Kante angefast werden soll, erstreckt.

Insbesondere bei Mehrfachverzahnungen oder bei verzahnten Wellen kann das Chamfer-Cut-Verfahren daher oftmals nicht für alle Zahnkanten eingesetzt werden.

Bisher war es in solchen Fällen nur möglich, die durch Störkonturen blockierten Zahnkanten mittels Drückentgraten zu entgraten. Bei diesem Verfahren wird das Material jedoch in die Zahnflanke hineingedrückt wird, so dass es gerade beim Hohnen zu einem hohen Verschleiß des Werkzeugs im Bereich der Zahnkanten führt.

Aufgabe der Erfindung ist es, eine verbesserte Vorrichtung zur Anfasbearbeitung mindestens zweier Kanten eines verzahnten Werkstücks zur Verfügung zu stellen.

Diese Aufgabe wird durch die Vorrichtung gemäß Anspruch 1 gelöst. Bevorzugte Ausgestaltungen der vorliegenden Erfindung sind Gegenstand der Unteransprüche.

Die vorliegende Erfindung umfasst eine Vorrichtung zur Anfasbearbeitung mindestens zweier Kanten eines verzahnten Werkstücks, wobei die Vorrichtung mindestens eine Werkstückspindel mit einer drehbar gelagerten Werkstückaufnahme zur Aufnahme des Werkstücks und einen über mindestens eine Bewegungsachse relativ zur Werkstückaufnahme bewegbaren Bearbeitungskopf umfasst, wobei an dem Bearbeitungskopf mindestens eine erste Werkzeugspindel mit einer ersten drehbar gelagerte Werkzeugaufnahme zur Aufnahme mindestens eines ersten Anfasfräsers zur Anfasbearbeitung einer ersten Kante einer Verzahnung eines in der Werkstückaufnahme aufgenommenen Werkstücks vorgesehen ist. Die vorliegende Erfindung ist dadurch gekennzeichnet, dass an dem Bearbeitungskopf eine zweite Werkzeugspindel mit einer zweiten drehbar gelagerte Werkzeugaufnahme zur Aufnahme eines Fingerfräsers zur Anfasbearbeitung einer zweiten Kante einer Verzahnung des in der Werkstückaufnahme aufgenommenen Werkstücks vorgesehen ist.

Erfindungsgemäß können daher jene Kanten, welche über den ersten Anfasfräser nicht bearbeitet werden können, mit dem Fingerfräser bearbeitet werden. Die verbleibenden Kanten, bei welchen keine Störkonturen bestehen, werden dann mit dem mindestens einen ersten Anfasfräser bearbeitet. Das Bearbeiten mit dem Fingerfräser ist zwar zeitaufwendiger als die Bearbeitung mit dem Anfasfräse, ermöglicht jedoch erstmals die Bearbeitung von Kanten, deren Bearbeitung durch Störkonturen erschwert wird, mit der nunmehr geforderten Qualität. Durch die Anordnung der zweiten Werkzeugspindel mit der zweiten Werkzeugaufnahme für den Fingerfräser an dem Bearbeitungskopf, an welchem auch die erste Werkzeugspindel mit der ersten Werkzeugaufnahme für den ersten Anfasfräser angeordnet ist, kann der Fingerfräser über die mindestens eine Bewegungsachse des Bearbeitungskopfes relativ zur Zahnkante positioniert und mit dieser in Eingriff gebracht werden.

In einer möglichen Ausgestaltung der vorliegenden Erfindung sind die Werkstückaufnahme und die erste Werkzeugaufnahme zum Anfasen der ersten Kante synchronisiert antreibbar. Bevorzugt werden zur Erzeugung der jeweiligen Drehbewegung der Werkstückaufnahme und der ersten Werkzeugaufnahme NC-Achsen eingesetzt, deren Drehbewegung durch eine Steuerung der Vorrichtung synchronisierbar ist, um eine Anfasfräsbearbeitung einer ersten Kante durchzuführen.

Bevorzugt sind die Werkstückaufnahme und die erste Werkzeugaufnahme wälzgekoppelt antreibbar. Dies erlaubt eine besonders effektive Anfasfräsbearbeitung.

Gemäß der vorliegenden Erfindung handelt es sich bei dem ersten Anfasfräswerkzeug um ein scheibenförmiges Entgratwerkzeug, welches am Umfang Schneidzähne und Spannuten aufweist. Die Schneidkanten der Schneidzähne sind bevorzugt spezifisch an die Form der zu bearbeitenden Kante angepasst. Zur Anfräsefasbearbeitung unterschiedlicher Verzahnungen werden dementsprechend unterschiedliche erste Anfasfräser benötigt.

Bevorzugt handelt es sich bei dem mindestens einen ersten Anfasfräser um einen Chamfer-Cut-Fräser und/oder ein Wälzschälwerkzeug. Bei einem Chamfer-Cut-Fräser handelt es sich um ein scheibenförmiges Entgratwerkzeug, welches am Umfang Schneidzähne und Spannuten aufweist, bevorzugt mit jeweils gleichem Umfangsabstand. Die Schneidzähne haben einen in Umfangsrichtung schraubenlinienförmigen Verlauf. Der Chamfer-Cut-Fräser ist mehrgängig, wobei pro Gang ein Zahn vorgesehen ist. Die an der in Drehrichtung vorderen Seite der Zähne ausgebildeten Schneidkanten liegen jedoch auf einem gemeinsamen Flugkreis.

Insbesondere kann der Chamfer-Cut-Fräser so ausgestaltet sein wie das EntgratWerkzeug, welches in der DE 10330474 A1 beschrieben ist. Weiterhin bevorzugt erfolgt das Anfasen der ersten Kante mittels des Chamfer-Cut-Fräsers so, wie dies ebenfalls in der DE 10330474 A1 für den Entgratvorgang beschrieben ist. Anders als in der DE 10330474 A1 gezeigt wird der Chamfer-Cut-Fräser jedoch im Rahmen der vorliegenden Erfindung bevorzugt nicht mit dem Werkzeug, welches zur Herstellung der Verzahnung eingesetzt wird, auf dem gleichen Werkzeugdorn aufgespannt, sondern in einer eigenen Werkzeugaufnahme.

Bevorzugt handelt es sich bei der mindestens einen Bewegungsachse des Bearbeitungskopfes um eine NC-Achse, welche zur Anfasbearbeitung der zweiten Kante durch eine Steuerung der Vorrichtung so betätigbar ist, dass ein in der zweiten Werkzeugaufnahme aufgenommener Fingerfräser entlang der Kontur der zu bearbeitenden zweiten Kante geführt wird, während sich das in der Werkstückaufnahme aufgenommene Werkstück um seine Drehachse dreht. Die Verfahrbewegung der mindestens eine NC-Achse des Bearbeitungskopfes wiederholt sich im Rahmen der Anfasbearbeitung der zweiten Kante daher bevorzugt für jeden zu bearbeitenden Zahn der Verzahnung.

Insbesondere kann es sich bei der mindestens einen Bewegungsachse, welche zur Anfasbearbeitung der zweiten Kante eingesetzt wird, um mindestens eine erste Linearachse X, über welche der Bearbeitungskopf in einer Richtung senkrecht zur Drehachse der Werkstückaufnahme und senkrecht zur Drehachse der ersten Werkzeugaufnahme verfahrbar ist, und/oder um mindestens eine zweite Linearachse Z, über welche der Bearbeitungskopf in einer Richtung parallel zur Drehachse der Werkstückaufnahme verfahrbar ist, handeln.

Weiterhin kann der Bearbeitungskopf um eine Schwenkachse A verschwenkbar sein, welche senkrecht auf zur Drehachse der Werkstückaufnahme und senkrecht zur Drehachse der ersten Werkzeugaufnahme verläuft. Diese Schwenkachse A wird in einer ersten Ausgestaltung der Erfindung während der Anfasbearbeitung der zweiten Kante nicht betätigt. In einer zweiten Ausgestaltung kann die Schwenkachse A jedoch in einer sich für jeden Zahn wiederholenden Bewegung verschwenkt werden.

Weiterhin kann der Bearbeitungskopf über eine dritte Linearachse Y oder V, welche in einer Ebene verläuft, die senkrecht auf der ersten Linearachse X steht, verfahrbar sein.

Die dritte Linearachse Y oder V kann dazu eingesetzt werden, um zwischen einer Bearbeitung zweier Kanten durch unterschiedliche Werkzeuge den Bearbeitungskopf zu verfahren, um das jeweilige Werkzeug mit dem Werkstück in Eingriff zu bringen.

Die dritte Linearachse Y oder V wird in einer ersten Ausgestaltung der Erfindung während der Anfasbearbeitung mindestens einer Kante und insbesondere der zweiten Kante dagegen nicht betätigt.

In einer möglichen Ausgestaltung der Erfindung ist am Bearbeitungskopf ein Einfädelsensor angeordnet, welcher sowohl für das Einfädeln des ersten Anfasfräsers zur Anfasbearbeitung der ersten Kante als auch für das Einfädeln des Fingerfräsers zur Anfasbearbeitung der zweiten Kante einsetzbar ist. Bevorzugt handelt es sich um einen berührungslosen Sensor. Beispielsweise kann ein induktiver Sensor und/oder ein optischer Sensor eingesetzt werden.

In einer möglichen Ausgestaltung der Erfindung ist die zweite Werkzeugspindel über eine Schwenkachse an dem Bearbeitungskopf angeordnet, über welche sie aus einer ersten Bearbeitungsposition zur Bearbeitung einer unteren Kante in eine zweite Bearbeitungsposition zur Bearbeitung einer oberen Kante verschwenkbar ist.

Bevorzugt handelt es sich bei der Schwenkachse um eine Stellachse. Der Einsatz einer NC-Achse ist hier nicht notwendig, da die Achse nicht dynamisch verfahren, sondern lediglich vor der Anfasbearbeitung in die richtige Bearbeitungsposition verschwenkt werden, um in einem Winkel zur Stirnseite des Werkstücks ausgerichtet zu sein, welcher dem gewünschten Winkel der Fase entspricht.

Bevorzugt sind jedoch verstellbare Anschläge zur Einstellung der ersten und der zweiten Bearbeitungsposition vorgesehen, so dass der Winkel der Fase eingestellt werden kann.

Bevorzugt kann die Schwenkachse über einen Aktor betätigt werden, insbesondere über einen Pneumatikzylinder. Alternativ kann die Schwenkachse jedoch auch nur manuell betätigbar sein.

In einer alternativen Ausgestaltung kann die zweite Werkzeugspindel jedoch auch starr an dem Bearbeitungskopf angeordnet sein. Ein Verschwenken der zweiten Werkzeugspindel aus einer ersten Bearbeitungsposition zur Bearbeitung einer unteren Kante in eine zweite Bearbeitungsposition zur Bearbeitung einer oberen Kante kann dann über die A-Achse des Bearbeitungskopfes erfolgen.

In einer möglichen Ausgestaltung ist die Drehachse der zweiten Werkzeugaufnahme in einem Winkel zu einer Ebene, welche senkrecht zur Drehachse der Werkstückaufnahme verläuft, ausgerichtet und/oder ausrichtbar, welcher in einem Bereich zwischen +/- 55° liegt, bevorzugt in einem Bereich zwischen +/- 45° und +/-30°. Insbesondere kann die Drehachse der zweiten Werkzeugaufnahme so ausgeführt sein, dass eine Bearbeitung einer Kante mit einem Winkel der zweiten Werkzeugaufnahme zu einer Ebene, welche senkrecht zur Drehachse der Werkstückaufnahme verläuft, von betragsmäßig mindestens 30° erfolgen kann. Bevorzugt liegt der Winkel betragsmäßig in einem Bereich zwischen 30° und 55° Grad.

In einer möglichen Ausgestaltung der vorliegenden Erfindung ist vorgesehen, dass die Anfasbearbeitung mit einer Ausrichtung der zweiten Werkzeugaufnahme erfolgt, durch welche ein in der zweiten Werkzeugaufnahme aufgenommener Fingerfräser ausgehend von der Werkzeugaufnahme durch die Zahnlücke hindurch zu der Kante der Verzahnung verläuft, welche er bearbeitet. Der Fingerfräser erstreckt sich in diesem Fall bevorzugt nur mit seiner Spitze über jene Stirnfläche des Werkstücks, deren Kante mit der Verzahnung er bearbeitet. Dies erlaubt die Bearbeitung der Kante auch beim Vorhandensein von Störkonturen.

In einer möglichen Ausgestaltung ist die zweite Werkzeugspindel starr oder nur über eine oder mehrere Stellachsen an dem Bearbeitungskopf angeordnet. Bevorzugt ist jedoch zur Einstellung des Anfas-Winkels eine Verstellanordnung zur Verstellung einer Winkelstellung der Drehachse der zweiten Werkzeugaufnahme relativ zum Bearbeitungskopf vorgesehen.

Alternativ kann die zweite Werkzeugspindel über mindestens eine NC-Achse, insbesondere eine Schwenkachse, an dem Bearbeitungskopf angeordnet sein.

Die Drehachse der zweiten Werkzeugaufnahme kann pneumatisch, hydraulisch, und/oder elektrisch antreibbar sein und ist bevorzugt pneumatisch antreibbar.

In einer möglichen Ausgestaltung sind mehrere erste Anfasfräser gemeinsam an einem Dorn an der ersten Werkzeugaufnahme aufnehmbar, wobei die Vorrichtung eine Steuerung aufweist, durch welche mehrere erste Kanten durch die ersten Anfasfräser anfasbearbeitbar sind. Die Form der Schneidzähne der ersten Anfasfräser ist hierfür bevorzugt spezifisch an die Form der zu bearbeitenden Kanten angepasst.

In einer möglichen Ausgestaltung ist zusammen mit dem mindestens einen ersten Anfasfräser eine Bürste an einem Dorn an der ersten Werkzeugaufnahme aufnehmbar, wobei die Vorrichtung eine Steuerung aufweist, durch welche eine durch den ersten Anfasfräsers oder den Fingerfräser anfasbearbeitete Kante durch die Bürste entgratet werden kann.

Bevorzugt ist hierfür der Bearbeitungskopf um eine Schwenkachse A verschwenkbar ist, welche senkrecht auf zur Drehachse der Werkstückaufnahme und senkrecht zur Drehachse der ersten Werkzeugaufnahme verläuft. Hierdurch kann die Drehachse der ersten Werkzeugaufnahme zur Bürstbearbeitung der zweiten Kante parallel zur Achse der Werkstückaufnahme ausgerichtet werden.

In einer möglichen Ausgestaltung weist die Vorrichtung eine Steuerung auf, welche die Erzeugung einer Fase nur in Teilbereichen der zweiten Kante erlaubt. Insbesondere können hierdurch jene Bereiche der Kante, in welchen nicht ausreichend Material zur Erzeugung einer Fase zur Verfügung steht, bei der Anfasbearbeitung ausgespart werden.

Der Fingerfräser kann daher auch bei Verzahnungen von Wellen eingesetzt werden, bei welchen der Zahnfuß im Wesentlichen dem Radius der Welle entspricht und daher in diesem Bereich keine Zahnkante vorhanden ist. Da der Fräser NC-gesteuert entlang der Zahnkante geführt wird, während das Werkstück gedreht wird, können hier beispielsweise nur die Zahnköpfe und die Zahnflanken unter Aussparung des Zahnfußes entgratet werden.

In einer möglichen Ausgestaltung weist die Vorrichtung eine Steuerung auf, welche die Bearbeitung von unterschiedlichen Teilbereichen der zweiten Kante mit unterschiedlichen Bereichen des Fingerfräsers, insbesondere mit einem Mantelbereich und einen Kopfbereich, erlaubt.

Beispielsweise kann hierdurch im Bereich der Flanken und des Kopfes mit dem Umfang des Fingerfräsers gearbeitet werden, im Bereich des Zahnfußes dagegen ein abgerundeter Kopf des Fingerfräsers eingesetzt werden, sodass sich hier eine entsprechend schmälere Fase ergibt.

Die vorliegende Erfindung erlaubt daher insbesondere auch eine Anfasbearbeitung der Verzahnung einer Welle.

Als Fingerfräser kommen beliebige Formen zum Einsatz. Insbesondere kann der Fingerfräser zylindrisch oder konisch ausgeführt sein. Der Kopf kann gegebenenfalls abgerundet sein. Weiterhin wäre auch der Einsatz eines Fingerfräsers mit einem Kugelkopf denkbar.

In einer möglichen Ausgestaltung der vorliegenden Erfindung ist die Vorrichtung zum Einsatz eines Fingerfräsers mit einer zylindrischen Mantelfläche oder einer konischen Mantelfläche mit einem Konuswinkel von weniger als 20°, bevorzugt von weniger als 10° ausgelegt.

Der Fingerfräser kann in einer möglichen Ausgestaltung einen verrundeten Kopf aufweisen.

In einer möglichen Ausgestaltung weist die Vorrichtung eine Steuerung zur Ansteuerung der Achsen der Vorrichtung zum automatischen Anfasen der Kanten der Verzahnung des Werkstücks auf.

Die Steuerung der Vorrichtung ist bevorzugt so programmiert, dass die erfindungsgemäßen Vorrichtungen die oben im Hinblick auf deren Funktionsweise und/oder Anwendung beschriebenen Schritte automatisch durchführt, und/oder die im Folgenden noch beschriebenen Verfahren automatisch durchführt..

Die Steuerung weist insbesondere einen Mikroprozessor und einen Speicher auf, in welchem ein Steuerprogramm zur Ansteuerung der Vorrichtung abgespeichert ist, welches durch den Mikroprozessor abgearbeitet wird.

Die vorliegende Erfindung stellt zunächst eine Vorrichtung, wie sie oben näher beschrieben wurde, unter Schutz, welche zur Aufnahme eines ersten Anfasfräsers und insbesondere eines Chamfer-Cut-Fräsers in der ersten Werkzeugaufnahme, zur Aufnahme eines Fingerfräsers in der zweiten Werkzeugaufnahme und zur Durchführung der oben beschriebenen Anwendungen geeignet ist. Insbesondere weist die Vorrichtung eine Steuerung auf, welche den Einsatz solcher Werkzeuge zur Anfasbearbeitung einer ersten und zweiten Kante ermöglicht.

Die vorliegende Erfindung umfasst jedoch ebenfalls eine Vorrichtung, wie sie oben beschrieben ist, bei welcher mindestens ein erste Anfasfräser und insbesondere ein Chamfer-Cut-Fräser in der ersten Werkzeugaufnahme und ein Fingerfräser in der zweiten Werkzeugaufnahme aufgenommen ist.

Bei der Vorrichtung kann es sich in einer ersten Ausführungsform um eine stand-alone Anfasmaschine handeln.

In einer zweiten Ausführungsform handelt es sich bei der erfindungsgemäßen Vorrichtung dagegen um eine in ein Verzahnbearbeitungszentrum integrierte Anfasvorrichtung.

Die vorliegende Erfindung betrifft weiterhin ein Verzahnbearbeitungszentrum gemäß Anspruch 13 mit einer Vorrichtung, wie sie oben beschrieben wurde, einer Verzahnmaschine und einem Werkstückwechsler. Bevorzugt handelt es sich bei der Verzahnmaschine um eine Verzahnungsstoßmaschine oder um eine Wälzschälmaschine oder eine Wälzfräsmaschine. Bevorzugt erfolgt die Verzahnbearbeitung und das Anfasen der Werkstücke in dem Verzahnbearbeitungszentrum taktzeit-parallel. Insbesondere werden durch die Verzahnmaschine verzahnte Werkstücke über den Werkstückwechsler zur Vorrichtung gemäß der vorliegenden Erfindung zum Anfasen weiter transportiert, um angefast zu werden, während auf der Verzahnmaschine bereits das nächste Werkstück verzahnt wird. Dabei ist auch ein Anfasen des Werkstücks zwischen einem Schruppschritt und einem Schlichtschritt denkbar, wofür das Werkstück bevorzugt von der Verzahnmaschine zu der erfindungsgemäßen Vorrichtung und wieder zurück verfahren wird.

Bevorzugt handelt es sich bei dem Werkstückwechsler um eine Ring-Automation, wobei weiterhin bevorzugt die erfindungsgemäße Vorrichtung zum Anfasen sowie die Verzahnmaschine an unterschiedlichen Winkelpositionen der Ring-Automation angeordnet sind.

Bevorzugt weisen die Verzahnmaschine und die erfindungsgemäße Vorrichtung separate Werkstückaufnahmen auf. Der Werkstückwechsler wechselt in diesem Fall ein Werkstück nach der Verzahnbearbeitung der Verzahnmaschine von der dortigen Werkstückaufnahme zur Werkstückaufnahme der erfindungsgemäßen Vorrichtung zum Anfasen.

In einer alternativen Ausgestaltung kann das Verzahnbearbeitungszentrum jedoch auch mehrere Werkstückaufnahmen aufweisen, in welchen die Werkstücke für die Verzahnbearbeitung und die Anfasbearbeitung verbleiben. In diesem Fall werden die Werkstückaufnahmen bevorzugt von der Verzahnmaschine zu der erfindungsgemäßen Vorrichtung bewegt und/oder umgekehrt.

Der Werkstückwechsler wird bevorzugt dazu eingesetzt, um Werkstücke von einer externen Transportstrecke oder anderen Bearbeitungsstationen auf die Werkstückaufnahme oder Werkstückaufnahmen aufzulegen und von diesen abzunehmen.

Gemäß einem weiteren Aspekt der vorliegenden Erfindung kann die erfindungsgemäße Vorrichtung auch als eine separate stand-alone Maschine ausgeführt sein. Bevorzugt erhält diese verzahnte Werkstücke von einer Transportstrecke und/oder Automation, um diese Anfaszubearbeiten. Die entsprechend bearbeiteten Werkstücke werden dann bevorzugt wieder einer Transportstrecke und/oder Automation übergeben.

Die vorliegende Erfindung umfasst auch unabhängig von den bisher dargestellten Vorrichtungen ein Verfahren gemäß Anspruch 14 zur Anfasbearbeitung mindestens zweier Kanten eines verzahnten Werkstücks, mittels einer Vorrichtung mit mindestens einer drehbar gelagerten Werkstückaufnahme zur Aufnahme des Werkstücks und einem über mindestens eine Bewegungsachse relativ zur Werkstückaufnahme bewegbaren Bearbeitungskopf, wobei an dem Bearbeitungskopf mindestens eine erste drehbar gelagerte Werkzeugaufnahme vorgesehen ist, wobei eine erste Kante einer Verzahnung eines in der Werkstückaufnahme aufgenommenen Werkstücks über einen in der ersten Werkzeugaufnahme aufgenommenen Anfasfräser anfasbearbeitet wird. Erfindungsgemäß ist eine zweite drehbar gelagerte Werkzeugaufnahme vorgesehen, wobei die Anfasbearbeitung einer zweiten Kante einer Verzahnung des in der Werkstückaufnahme aufgenommenen Werkstücks über einen in der zweiten Werkzeugaufnahme aufgenommenen Fingerfräser erfolgt.

Bevorzugt werden das erfindungsgemäße Verfahren und die erfindungsgemäße Vorrichtung zur Anfasbearbeitung eines Werkstücks mit einer Mehrfachverzahnung eingesetzt.

In einer möglichen Ausgestaltung der vorliegenden Erfindung werden mindestens zwei Kanten der mehreren Verzahnungen durch einen oder mehrere in der ersten Werkzeugaufnahme aufgenommenen ersten Anfasfräser anfasbearbeitet und mindestens eine Kante einer Verzahnung durch den in der zweiten Werkzeugaufnahme aufgenommenen Fingerfräser anfasbearbeitet.

Das erfindungsgemäße Verfahren sowie die erfindungsgemäße Vorrichtung können sowohl zur Anfasbearbeitung der Kanten eines Werkstücks mit einer Außenverzahnung, als auch zur Anfasbearbeitung der Kanten eines Werkstücks mit Innenverzahnung eingesetzt werden und/oder zur Bearbeitung einer Kante einer evolventischen oder nicht-evolventischen Kontur mit wiederkehrender Struktur.

Bevorzugt erfolgt das erfindungsgemäße Verfahren auf einer Vorrichtung, wie sie oben bereits näher beschrieben wurde, und/oder in der Art, wie dies oben bereits dargestellt wurde.

Die vorliegende Erfindung wird nun anhand von Ausführungsbeispielen und Zeichnungen näher dargestellt.

Dabei zeigen:
- Fig. 1:: Ein Ausführungsbeispiel einer erfindungsgemäßen Vorrichtung zur Anfasbearbeitung eines Werkstücks,
- Fig. 2:: einen vergrößerten Ausschnitt des in Fig. 1 gezeigten Ausführungsbeispiels,
- Fig. 3:: die Anfasbearbeitung einer zweiten Kante durch einen in der zweiten Werkzeugaufnahme aufgenommenen Fingerfräser gemäß der vorliegenden Erfindung,
- Fig. 4:: die Anfasbearbeitung einer ersten Kante durch einen in der ersten Werkzeugaufnahme aufgenommenen Anfasfräser gemäß der vorliegenden Erfindung,
- Fig. 5:: die Anfasbearbeitung einer weiteren ersten Kante durch einen weiteren in der ersten Werkzeugaufnahme aufgenommenen Anfasfräser gemäß der vorliegenden Erfindung,
- Fig. 6:: die Anfasbearbeitung einer weiteren ersten Kante durch einen weiteren in der ersten Werkzeugaufnahme aufgenommenen Anfasfräser gemäß der vorliegenden Erfindung,
- Fig. 7:: den Einsatz eines Einfädelsensors zur Vorbereitung der Anfasbearbeitung einer ersten Verzahnung des Werkstücks,
- Fig. 8:: den Einsatz des Einfädelsensors zur Vorbereitung der Anfasbearbeitung einer zweiten Verzahnung des Werkstücks,
- Fig. 9:: eine Bürstbearbeitung der durch den Fingerfräser angefasten zweiten Kante durch eine in der ersten Werkzeugaufnahme aufgenommene Bürste,
- Fig. 10a und 10b:: die Anfasbearbeitung durch einen Fingerfräser an einer unteren und oberen Kante einer inneren Verzahnung eines Werkstückes mit drei Verzahnungen, und
- Fig. 11:: den Einsatz einer erfindungsgemäßen Vorrichtung zur Anfasbearbeitung eines Werkstücks in einem erfindungsgemäßen Bearbeitungszentrum mit einem Werkstückwechsler und einer Ringautomation.

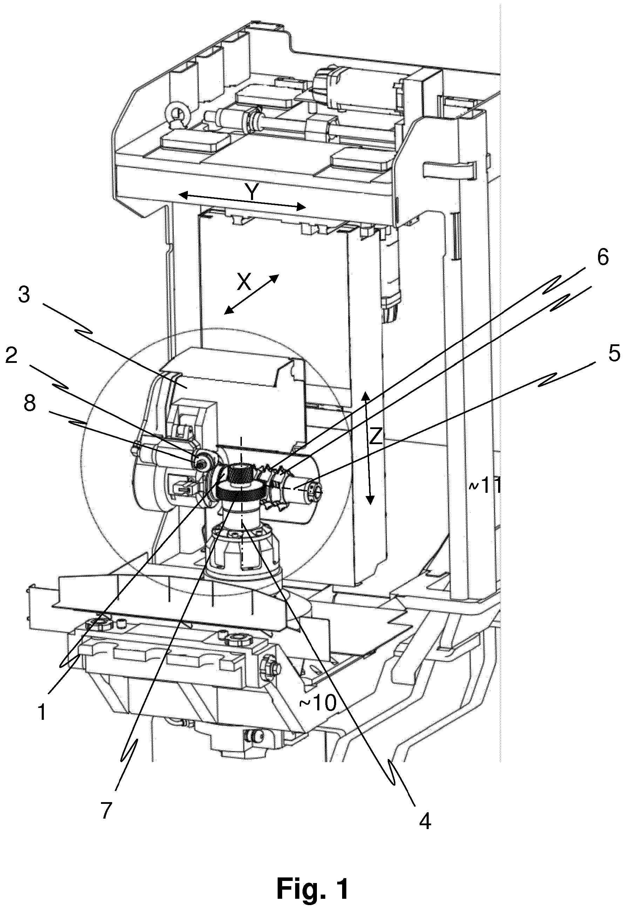

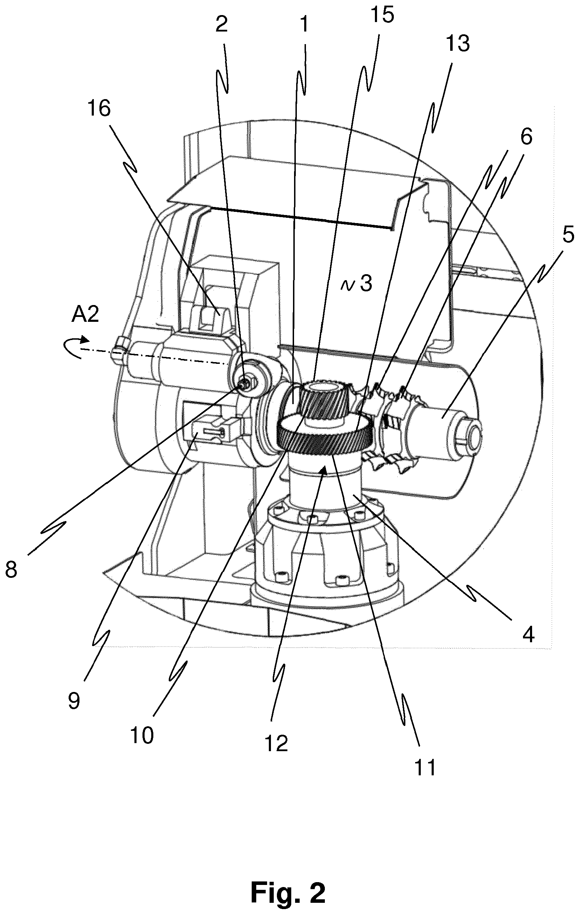

Fig. 1 und 2 zeigen ein Ausführungsbeispiel einer erfindungsgemäßen Vorrichtung zur Anfasbearbeitung eines Werkstücks.

Die Vorrichtung weist eine Werkstückspindel mit einer Werkstückaufnahme 4 auf, welche um eine Drehachse C2 drehbar ist. Zur Anfasbearbeitung eines in der Werkstückaufnahme aufgenommenen Werkstückes 7 ist ein Bearbeitungskopf 3 vorgesehen, welcher über Maschinenachsen X, Z, V/Y und A relativ zu der Werkstückaufnahme 4 bewegbar ist. An dem Bearbeitungskopf 3 ist eine erste Werkzeugspindel mit einer Werkzeugaufnahme 1 zur Aufnahme mindestens eines ersten Anfasfräsers 6 vorgesehen. Im Ausführungsbeispiel sind mehrere Anfasfräser 6 auf einem gemeinsamen Werkzeugdorn 5 in der ersten Werkzeugaufnahme 1 aufgenommen. Über einen Antrieb der ersten Werkzeugspindel können die Anfasfräser 6 um eine Drehachse B2 in Rotation versetzt werden.

Die Werkzeugaufnahme 4 ist im Ausführungsbeispiel an einem Maschinenbett 10 angeordnet und verläuft vertikal. Der Bearbeitungskopf ist über die Bewegungsachsen X, Z A, V oder alternativ Y hängend an einem Rahmen 11 angeordnet. Andere mechanische und kinematische Ausgestaltungen sind jedoch möglich. Beispielsweise kann die Werkzeugaufnahme 4 auf einem Maschinentisch angeordnet sein. Der Bearbeitungskopf kann an einem Werkzeugständer angeordnet sein.

Bei den Anfasfräsern 6 handelt es sich im Ausführungsbeispiel um sogenannte Chamfer-Cut-Fräser. Hierbei handelt es sich um ein scheibenförmiges Entgratwerkzeug, welches am Umfang mehrere Schneidzähne und Spannuten aufweist. Die Schneidzähne haben einen in Umfangsrichtung schraubenlinienförmigen Verlauf. Der Chamfer-Cut-Fräser ist mehrgängig, wobei pro Gang ein Zahn vorgesehen ist. Die an der in Drehrichtung vorderen Seite der Zähne ausgebildeten Schneidkanten liegen jedoch auf einen gemeinsamen Flugkreis.

Ein solcher Chamfer-Cut erlaubt ein sehr effizientes Entgraten der Zahnkanten, da jeder der Schneidzähne des Chamfer-Cut-Fräsers eine komplette Zahnnut der Verzahnung anfasbearbeitet. Hierfür wird der Chamfer-Cut-Fräser über die Bewegungsachsen des Bearbeitungskopfes zunächst in eine geeignete Position zur Zahnkante zugestellt. Dann werden die erste Werkzeugaufnahme und die Werkstückaufnahme synchron in Rotation versetzt, so dass aufeinander folgende Schneidzähne des Chamfer-Cut-Fräsers jeweils aufeinander folgende Zahnnuten der Verzahnung anfasbearbeiten.

Das Chamfer-Cut-Verfahren hat jedoch den Nachteil, dass im Bereich neben der zu bearbeitenden Kante relativ viel Platz für den Chamfer-Cut-Fräser benötigt wird. Sind daher neben der zu bearbeitenden Kante Störkonturen, bspw. in Form einer weiteren Verzahnung vorhanden, kann die Kante nicht über das Chamfer-Cut-Verfahren bearbeitet werden.

Um auch solche Kanten anfasbearbeiten zu können, ist an dem Bearbeitungskopf 3 erfindungsgemäß eine zweite Werkzeugspindel mit einer Werkzeugaufnahme 2 zur Aufnahme eines Fingerfräsers 8 vorgesehen.

Die Anfasbearbeitung einer zweiten Kante des Werkstücks durch den Fingerfräser erfolgt, indem dieser durch die Bewegungsachsen des Bearbeitungskopfes 3 und eine Rotation des Werkstückes um die Drehachse C2 entlang der zu bearbeitenden zweiten Zahnkante verfahren wird. Der Fingerfräser 8 wird hierbei durch einen entsprechenden Antrieb der zweiten Werkzeugspindel, welcher bevorzugt pneumatisch erfolgt, um eine Drehachse B3 in Rotation versetzt.

Im Ausführungseispiel weist der Bearbeitungskopf eine Bewegungsachse X auf, welche als Linearachse ausgestaltet ist und senkrecht auf der Drehachse C2 der Werkstückaufnahme 4 sowie der Drehachse B2 der ersten Werkzeugaufnahme 1 steht. Diese Bewegungsachse X erlaubt es, den Achsabstand zwischen der Werkstückaufnahme 1 und der ersten Werkzeugaufnahme 1 einzustellen. Weiterhin ist eine zweite Linearachse Z vorgesehen, über welche der Bearbeitungskopf 3 parallel zur Drehachse C2 der Werkstückaufnahme 4 verfahrbar ist. Diese erlaubt ein Verfahren der in der ersten Werkzeugaufnahme 1 aufgenommenen ersten Anfasfräser entlang der Zahnbreite zur entsprechenden Zahnkante.

Eine oder beide dieser Bewegungsachsen X und Z kann nun dazu eingesetzt werden, um den Fingerfräser 8 entlang der Zahnkante zu führen, während gleichzeitig das Werkstück um die Drehachse C2 gedreht wird. Für jeden Zahn der Verzahnung wir daher eine der Kontur des Zahnes folgende Verfahrbewegung der X-Achse und/oder der Z-Achse durchgeführt, durch welche der Fingerfräser der sich durch die Drehbewegung des Werkstücks an ihm vorbeigeführten Kontur der Kante des Zahnes folgt und an dieser eine Fase erzeugt.

Der Bearbeitungskopf weist weiterhin eine V-Achse auf, durch welche er parallel zur Drehachse B2 der ersten Werkzeugaufnahme verfahren werden kann. Hierdurch kann zum einen derjenige Chamfer-Cut-Fräser, welcher zur Bearbeitung der jeweiligen Kante eingesetzt werden soll, mit dieser in Eingriff gebracht werden. Zum anderen erlaubt diese Achse auch ein Verfahren des Fingerfräsers in die Eingriffsposition mit der Kante. Alternativ oder zusätzlich könnte eine Y-Achse eingesetzt werden, durch welche der Bearbeitungskopf in einer Richtung senkrecht zur X-Achse und zur Y-Achse verfahren werden kann. In diesem Fall wird zum Verfahren des Bearbeitungskopfes parallel zur Drehachse B2 der ersten Werkzeugaufnahme eine überlagerte Bewegung der Y-Achse und der Z-Achse eingesetzt, wenn die Drehachse B2 nicht parallel zur Y-Achse angeordnet ist.

Weiterhin weist der Bearbeitungskopf eine Schwenkachse A auf, welche senkrecht auf der Drehachse C2 der Werkstückaufnahme und der Drehachse B2 der ersten Werkzeugaufnahme steht und/oder parallel zur X-Achse verläuft. Hierdurch kann der Achswinkel zwischen dem Werkstück und den in der ersten Werkzeugaufnahme aufgenommenen Anfasfräsern eingestellt werden.

Die V-Achse (bzw. Y-Achse) und die A-Achse dienen lediglich zur Einstellung der Relativposition zwischen dem jeweiligen Werkzeug und der Zahnkante vor Durchführung der eigentlichen Anfasbearbeitung. Die X-Achse und/oder die Z-Achse werden dagegen während der durch den Fingerfräser erfolgenden Anfasbearbeitung einer zweiten Zahnkante dynamisch verstellt, um die Relativposition zwischen dem Werkstück und dem Fingerfräser zu verändern und hierdurch den Fingerfräser an der zu bearbeitenden Zahnkante entlang zu verfahren. Während der Anfasbearbeitung einer ersten Kante durch die ersten Anfasfräser dienen die X-Achse und die Z-Achse dagegen ebenfalls lediglich zur Einstellung der Relativposition zwischen Werkstück und Werkzeug, während die Relativbewegung allein durch die synchrone Rotation von Werkstück und Werkzeug erfolgt.

Bei den Bewegungsachsen, über welche der Bearbeitungskopf relativ zur Werkstückaufnahme verfahrbar ist, handelt es sich bevorzugt um NC-Achsen. Weiterhin sind bevorzugt auch die Drehachse der Werkstückspindel sowie die Drehachse der ersten Werkzeugspindel als NC-Achse ausgeführt. Die Drehachse der zweiten Werkzeugspindel ist dagegen nicht als NC-Achse ausgeführt, da die Drehbewegung des Fingerfräsers nicht mit anderen Bewegungen synchronisiert werden muss. Im Ausführungsbeispiel handelt es sich bei der zweiten Werkzeugspindel daher im Wesentlichen um einen Winkelschleifer, welcher an dem Bearbeitungskopf über eine Schwenkachse A2 angeordnet ist.

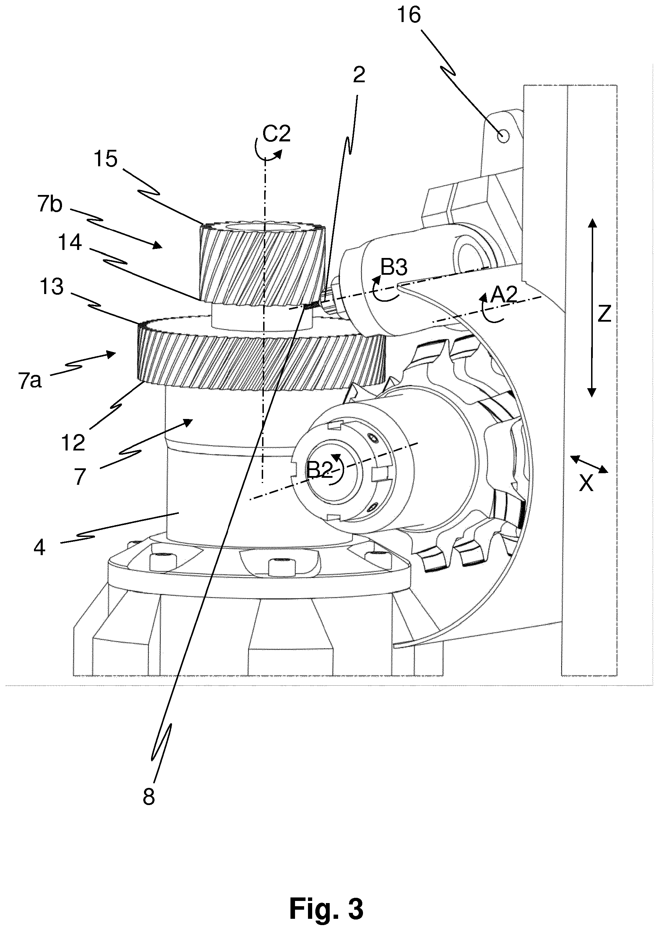

Die vorliegende Erfindung kann insbesondere zur Bearbeitung von Werkstücken 7 eingesetzt werden, wie sie in Fig. 1 bis 9 dargestellt sind, und welche (mindestens) zwei Verzahnungen 7a und 7b aufweisen. Die insbesondere in Fig. 3 gut erkennbare Ausgestaltung des Werkstückes mit zwei Verzahnungen 7a und 7b hat zur Folge, dass drei der insgesamt vier zur bearbeitenden Kanten der zwei Verzahnungen gut zugänglich sind und daher durch einen ersten Anfasfräser, insbesondere ein Chamfer-Cut-Fräser, anfasbearbeitet werden können. Im Ausführungsbeispiel sind dies die untere Kante 12 und die obere Kante 13 der ersten Verzahnung 7a mit größerem Durchmesser, so wir die obere Kante 15 der zweiten Verzahnung 7b mit kleinerem Durchmesser. Die untere, innenliegende Kante 14 der zweiten Verzahnung 7b mit kleinerem Durchmesser kann dagegen nicht im Chamfer-Cut-Verfahren bearbeitet werden, da die erste Verzahnung 7a hier eine Störkante bildet.

Wie in Fig. 3 dargestellt, wird diese zweite Kante 14 im Sinne der vorliegenden Erfindung daher über einen in der zweiten Werkzeugaufnahme 2 aufgenommenen Fingerfräser 8 anfasbearbeitet. Die Bearbeitung erfolgt so, wie dies oben bereits dargestellt wurde. Die Drehachse B3 des Anfasfräser weist hierbei bevorzugt einen Winkel zu einer Ebene senkrecht auf der Drehachse C2 der Werkstückaufnahme auf, welcher in einem Bereich zwischen 10° und 40° liegt, bevorzugt in einem Bereich zwischen 10° und 15°. Die zweite Werkstückspindel mit der zweiten Werkzeugaufnahme für den Fingerfräser ist hierfür entsprechend an dem Bearbeitungskopf angeordnet oder anordenbar.

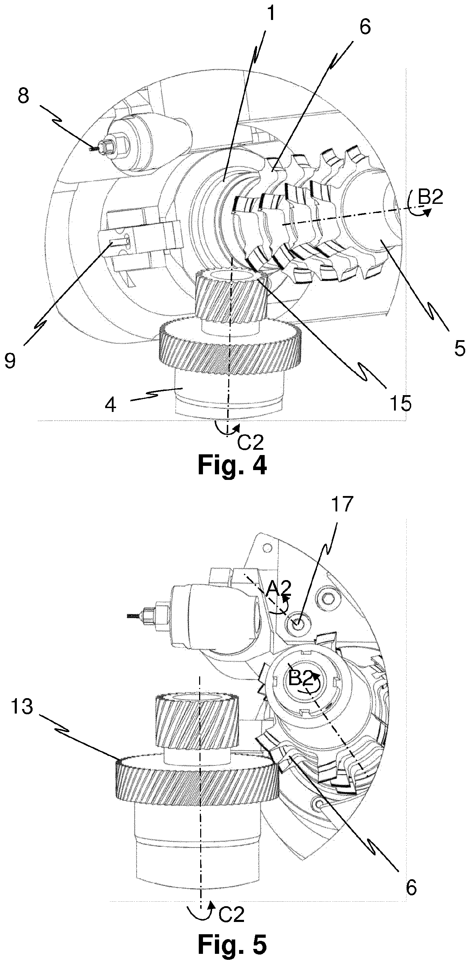

Wie in Fig. 4 bis 6 dargestellt, erfolgt die Anfasbearbeitung der Kanten 12, 13 und 15, die erste Kanten im Sinne der vorliegenden Erfindung darstellen, dagegen durch die in der ersten Werkzeugaufnahme 1 aufgenommenen Anfasfräser 6. Da diese spezifisch an die Form der jeweiligen Kanten angepasst werden müssen, sind in der ersten Werkzeugaufnahme 1 mehrere erste Anfasfräser 6 vorgesehen, so dass zur Bearbeitung jeder der Kanten 12, 13 und 15 ein eigenes erstes Anfasfräswerkzeug 6 zur Verfügung steht. Die Anfasfräsbearbeitung durch die ersten Anfasfräser 6 erfolgt wie bereits oben dargestellt jeweils durch eine synchrone Drehung der Drehachsen C2 der Werkstückaufnahme und B2 der ersten Werkzeugaufnahme.

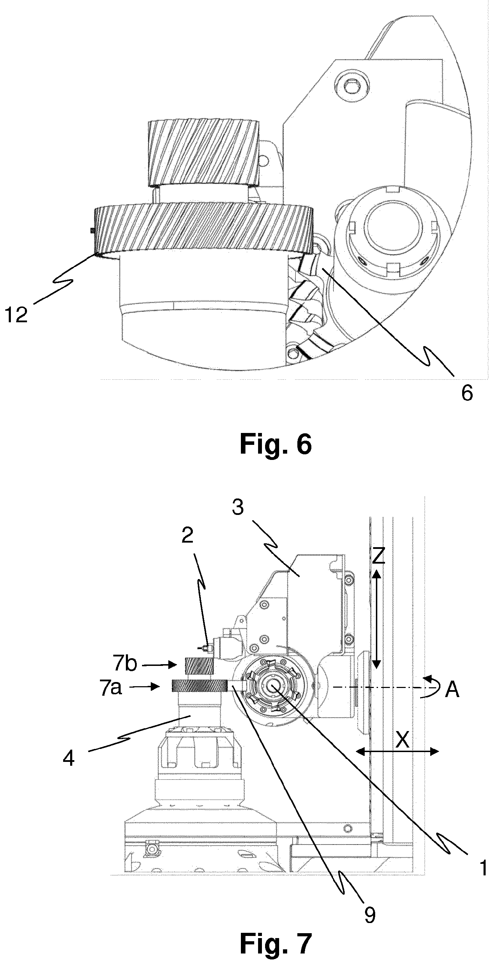

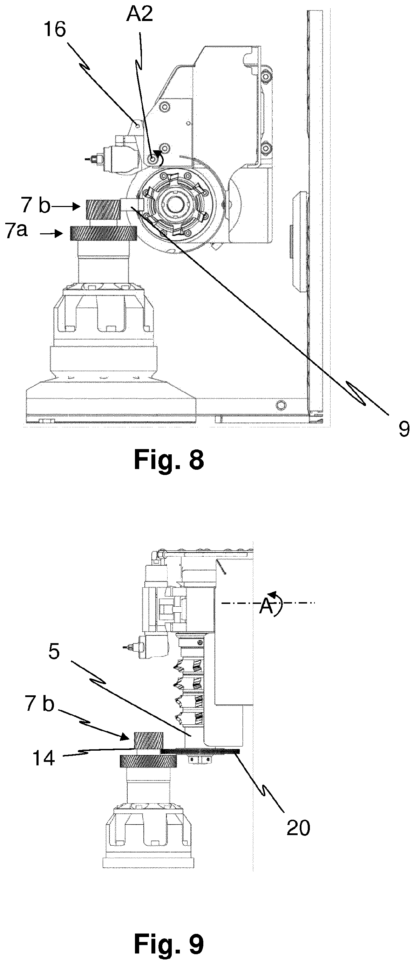

Da die erfindungsgemäße Vorrichtung lediglich der Anfasbearbeitung und nicht der Erzeugung der Verzahnung dient, ist die Lage der jeweiligen Verzahnung 7a und 7b nach dem Aufspannen eines Werkstückes in der Werkstückaufnahme 4 üblicherweise noch unbekannt. An dem Bearbeitungskopf 3 ist daher ein Einfädelsensor 9 vorgesehen, über welchen die Position der Zähne der jeweiligen Verzahnungen 7a und 7b erfasst wird. In Fig. 7 ist die Erfassung der Position der Zähne der ersten Verzahnung 7a, in Fig. 8 die Erfassung der Zähne der zweiten Verzahnung 7b gezeigt. Hierfür wird der Einfädelsensor 9 durch die Bewegungsachsen des Bearbeitungskopfes jeweils an die Verzahnung herangefahren und bevorzugt die Verzahnung durch Drehung der Werkstückaufnahme an dem Sensor vorbei gefahren. Die Erfassung erfolgt bevorzugt berührungslos, im Ausführungsbeispiel über einen induktiven Sensor.

Die durch den Einfädelsensor gewonnen Lageinformationen zur Position der Zähne der Verzahnungen werden dann sowohl zur Positionierung der ersten Anfasfräser relativ zu den ersten Kanten, als auch des Fingerfräsers 8 relativ zur zweiten Kante genutzt.

In Fig. 9 ist eine Variante der vorliegenden Erfindung gezeigt, bei welcher auf dem Werkzeugdorn 5 der ersten Werkzeugaufnahme weiterhin eine Bürste 20 vorgesehen ist. Da beim Fingerfräsen Sekundärgrate entstehen können, werden diese im Rahmen dieser Variante durch den Einsatz der Bürste 20 nach der Anfasbearbeitung der zweiten Kante durch den Fingerfräser entfernt. Hierfür wird der Bearbeitungskopf über die A-Achse in eine Position verschwenkt, in welcher die Drehachse der ersten Werkzeugaufnahme im Wesentlichen parallel zur Drehachse der Werkstückaufnahme verläuft, und die Bürste an der inneren Stirnseite der zweiten Verzahnung 7b bzw. der zweiten Kante 14 angelegt. Die ersten Kanten könnten im Prinzip ebenfalls durch die Bürste gebrüstet werden, dies ist jedoch aufgrund der hohen Qualität der Kanten bei einer Chamfer-Cut-Anfasbearbeitung üblicherweise nicht notwendig.

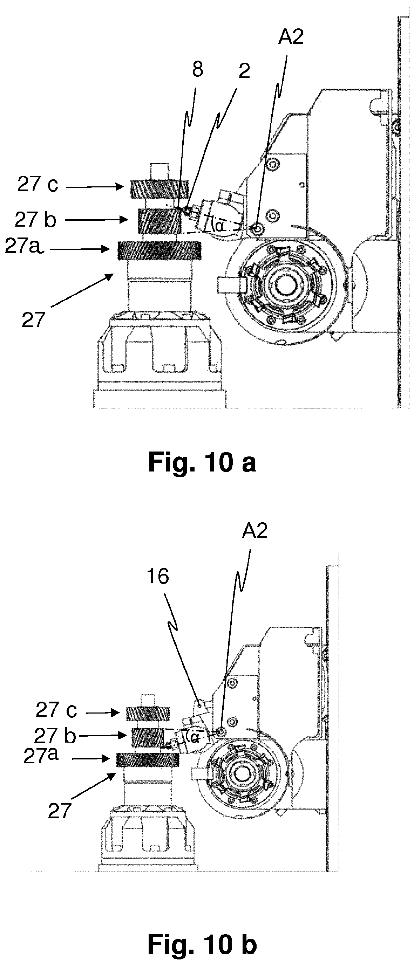

In Fig. 10a und 10b ist ein weiteres Beispiel für ein Werkstück 27 gezeigt, welches erfindungsgemäß anfasbearbeitet werden kann. Das Werkstück weist drei Verzahnungen 27a bis 27c auf. Die Kanten der beiden äußeren Verzahnungen 27a und 27c können hier jeweils durch erste Anfasfräser bearbeitet werden, da die äußeren Verzahnungen 27a und 27c einen größeren Durchmesser aufweisen als die innere Verzahnung 27b. Dagegen können weder die obere, noch die untere Kante der inneren Verzahnung 27b über einen ersten Anfasfräser anfasbearbeitet werden, da die jeweiligen äußeren Verzahnungen Störkanten bilden. Diese beiden zweiten Kanten im Sinne der vorliegenden Erfindung werden daher, wie in Fig. 10a und 10b dargestellt, durch einen in der zweiten Werkzeugaufnahme aufgenommenen Fingerfräser 8 anfasbearbeitet.

Zur Bearbeitung der oberen und der unteren Kante der inneren Verzahnung 27b sind jeweils unterschiedliche Bearbeitungspositionen des Fingerfräsers relativ zum Werkstück und insbesondere eine umgekehrte Ausrichtung des Fingerfräsers zu der jeweiligen Stirnseite des Werkstücks notwendig.

Daher ist die zweite Werkzeugspindel mit der zweiten Werkzeugaufnahme 2 über eine Schwenkachse A2 am Bearbeitungskopf angeordnet. Bei der Schwenkachse A2 handelt es sich im Ausführungsbeispiel jedoch nicht um eine NC-Achse, sondern um eine reine Stellachse, mittels welcher die zweite Werkzeugaufnahme von der in Fig. 10a dargestellten ersten Bearbeitungsposition zur Bearbeitung der oberen Kante der Verzahnung 27b in die in Fig. 10b dargestellte zweite Bearbeitungsposition zur Bearbeitung der Unterkante verschwenkt werden kann.

Im Ausführungsbeispiel greift hierfür an Position 16 ein Pneumatikzylinder an, über welchen die Verschwenkbewegung zwischen der ersten und der zweiten Bearbeitungsposition erfolgt. Ein manuelle Verstellung oder der Einsatz eines anderen Antriebs ist ebenfalls denkbar.

Die beiden Bearbeitungspositionen werden jeweils durch Anschläge definiert, an welchen die zweite Werkzeugaufnahme in der jeweiligen Position anliegt. Bevorzugt sind die beiden Anschläge einstellbar, um den Winkel α der Schwenkachse A2 der zweiten Werkzeugaufnahme relativ zu einer Ebene, welche senkrecht auf der Drehachse der Werkstückaufnahme steht, in einem gewissen Bereich einstellen zu können. Bevorzugt ist der Winkel α in einem Bereich zwischen mindestens 10° und 55° einstellbar.

Der erfindungsgemäße Fingerfräser kann auch zum Anfasen von Verzahnungen von Wellen eingesetzt werden, bei welchen der Zahnfuß im Wesentlichen dem Radius der Welle entspricht und daher in diesen Bereich keine oder nur eine sehr geringe Zahnkante aufweisen. Da der Fingerfräser NC-gesteuert entlang der Zahnkante geführt wird, während das Werkstück gedreht wird, können hier beispielsweise nur die Zahnköpfe und die Zahnflanken unter Aussparung des Zahnfußes entgratet werden.

Weiterhin ist es denkbar, beispielsweise im Bereich der Flanken des Kopfes mit dem Umfang des Fingerfräsers zu arbeiten, im Bereich des Zahnfußes dagegen einen abgerundeten Kopf des Fingerfräsers einzusetzen, so dass sich hier eine entsprechend schmälere Fase ergibt.

Die erfindungsgemäße Vorrichtung zur Anfasbearbeitung kann entweder in einer ersten Variante als Stand-Alone-Lösung ausgeführt sein, und entsprechend an eine Automatisierung angebunden werden, welche der Vorrichtung Werkstücke zuführt und von dieser abführt.

Bevorzugt wird die erfindungsgemäße Vorrichtung jedoch in einem Bearbeitungszentrum taktzeit-parallel zu einer Verzahnbearbeitungsstation eingesetzt. Bei der Verzahnbearbeitungsstation kann es sich beispielsweise um eine Fräsbearbeitungsstation, eine Stoßbearbeitungsstation oder eine Wälzschälbearbeitungsstation handeln. Im Hinblick auf die Störkonturen werden bevorzugt Stoßbearbeitungsstationen und/oder Wälzschälbearbeitungssationen eingesetzt.

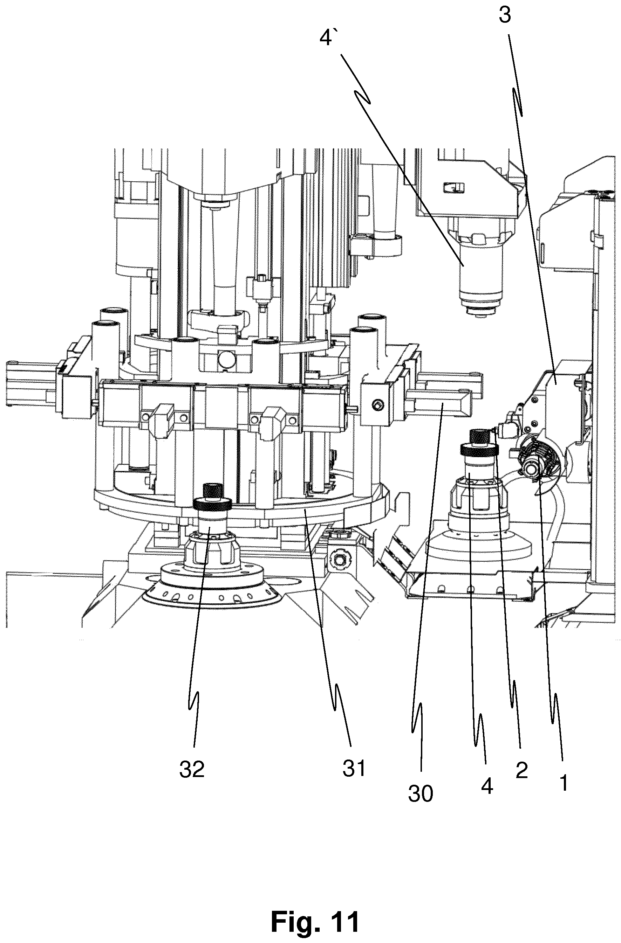

Eine solche Einbindung der erfindungsgemäßen Vorrichtung in ein Bearbeitungszentrum ist in Fig. 11 dargestellt. Das Bearbeitungszentrum weist einen Ringlader 31 mit einem Greifer 30 auf, über welchen die Werkstücke von einer Station zur nächsten versetzt werden können. Rechts ist die erfindungsgemäße Vorrichtung mit der Werkstückaufnahme 4 und dem Bearbeitungskopf 3 mit der ersten Werkzeugaufnahme 1 und der zweiten Werkzeugaufnahme 2 dargestellt. Weiterhin ist noch ein Gegenlager 4' für die Werkzeugaufnahme 4 zu sehen.

Um 90° versetzt ist die Werkstückaufnahme 32 der Verzahnbearbeitungsstation dargestellt. Der Bearbeitungskopf der Verzahnbearbeitungsmaschine ist dagegen nicht dargestellt.

Während an der Verzahnbearbeitungsstation die Erzeugung der Verzahnung oder einer der Verzahnungen eines Werkstückes erfolgt, kann taktzeit-parallel an der erfindungsgemäßen Vorrichtung das Entgraten der erzeugten Verzahnungen eines anderen Werkstücks erfolgen.

Die erfindungsgemäße Vorrichtung bzw. das Bearbeitungszentrum weisen dabei eine Steuerung auf, durch welche sämtliche der beschriebenen Vorgänge automatisch durchgeführt werden.

Anstelle der im Ausführungsbeispiel eingesetzten Chamfer-Cut-Fräser könnten als erste Anfasfräser auch Wälzschälwerkzeuge eingesetzt werden, um die ersten Kanten der Verzahnung zu bearbeiten. Das beschriebene Anfasverfahren würde auch mit einem Wälzschälwerkzeug in gleicher Weise durchgeführt werden, wie dies oben für den Einsatz von Chamfer-Cut-Fräsern beschrieben wurde.

Die erfindungsgemäße Vorrichtung und das erfindungsgemäße Verfahren wurden anhand von Ausführungsbeispielen beschrieben, welche zur Bearbeitung von Werkstücken mit einer Außenverzahnung vorgesehen sind. Die vorliegende Erfindung ist jedoch in gleicher Weise auch für Werkstücke mit Innenverzahnung einsetzbar. In diesem Fall muss der Bearbeitungskopf so ausgestaltet sein, dass der erste Anfasfräser und bevorzugt auch der Fingerfräser in das Innere der Verzahnung hinein verfahren werden können.

## Patentansprüche

1. Vorrichtung zur Anfasbearbeitung mindestens zweier Kanten eines verzahnten Werkstücks (7, 27), wobei die Vorrichtung mindestens eine Werkstückspindel mit einer drehbar gelagerten Werkstückaufnahme (4) zur Aufnahme des Werkstücks und einen über mindestens eine Bewegungsachse relativ zur Werkstückaufnahme bewegbaren Bearbeitungskopf (3) umfasst, wobei an dem Bearbeitungskopf mindestens eine erste Werkzeugspindel mit einer ersten drehbar gelagerte Werkzeugaufnahme (1) vorgesehen ist, wobei die Vorrichtung so ausgestaltet ist, dass eine erste Kante (12, 13, 15) einer Verzahnung (7a, 7b; 27a, 27c) eines in der Werkstückaufnahme aufgenommenen Werkstücks über einen in der ersten Werkzeugaufnahme aufgenommenen Anfasfräser (6) anfasbearbeitet werden kann, wobei es sich bei dem ersten Anfasfräser um ein scheibenförmiges Entgratwerkzeug, welches am Umfang Schneidzähne und Spannuten aufweist, handelt, und wobei an dem Bearbeitungskopf eine zweite Werkzeugspindel mit einer zweiten drehbar gelagerten Werkzeugaufnahme (2) vorgesehen ist,
**dadurch gekennzeichnet,**
**dass** die Vorrichtung so ausgestaltet ist, dass eine zweite Kante (14) einer Verzahnung (7b, 27b) des in der Werkstückaufnahme aufgenommenen Werkstücks über einen in der zweiten Werkzeugaufnahme aufgenommenen Fingerfräser (8) anfasbearbeitet werden kann.

2. Vorrichtung nach Anspruch 1, wobei die Werkstückaufnahme und die erste Werkzeugaufnahme zum Anfasen der ersten Kante synchronisiert antreibbar sind, wobei die Werkstückaufnahme und die erste Werkzeugaufnahme bevorzugt wälzgekoppelt antreibbar sind und/oder wobei es sich bei dem ersten Anfasfräswerkzeug bevorzugt um einen Chamfer-Cut-Fräser oder ein Wälzschälwerkzeug handelt.

3. Vorrichtung nach Anspruch 1 oder 2, wobei es sich bei der mindestens einen Bewegungsachse um eine NC-Achse handelt, welche zur Anfasbearbeitung der zweiten Kante durch eine Steuerung der Vorrichtung so betätigbar ist, dass ein in der zweiten Werkzeugaufnahme aufgenommener Fingerfräser entlang der Kontur der zu bearbeitenden zweiten Kante geführt wird, während sich das in der Werkstückaufnahme aufgenommene Werkstück um seine Drehachse dreht.

4. Vorrichtung nach einem der vorangegangenen Ansprüche, wobei es sich bei der mindestens einen Bewegungsachse um mindestens eine erste Linearachse X, über welche der Bearbeitungskopf in einer Richtung senkrecht zur Drehachse der Werkstückaufnahme und senkrecht zur Drehachse der ersten Werkzeugaufnahme verfahrbar ist, und/oder um mindestens eine zweite Linearachse Z, über welche der Bearbeitungskopf in einer Richtung parallel zur Drehachse der Werkstückaufnahme verfahrbar ist, handelt, und/oder wobei der Bearbeitungskopf um eine Schwenkachse A verschwenkbar ist, welche senkrecht auf zur Drehachse der Werkstückaufnahme und senkrecht zur Drehachse der ersten Werkzeugaufnahme verläuft, und/oder wobei der Bearbeitungskopf über eine dritte Linearachse Y oder V, welche in einer Ebene verläuft, die senkrecht auf der ersten Linearachse X steht, verfahrbar ist.

5. Vorrichtung nach einem der vorangegangen Ansprüche, wobei am Bearbeitungskopf ein Einfädelsensor angeordnet ist, welcher sowohl für das Einfädeln des ersten Anfasfräsers zur Anfasbearbeitung der ersten Kante als auch für das Einfädeln des Fingerfräsers zur Anfasbearbeitung der zweiten Kante einsetzbar ist, wobei es sich bevorzugt um einen berührungslosen Einfädelsensor handelt.

6. Vorrichtung nach einem der vorangegangen Ansprüche, wobei die zweite Werkzeugspindel über eine Schwenkachse an dem Bearbeitungskopf angeordnet ist, über welche sie aus einer ersten Bearbeitungsposition zur Bearbeitung einer unteren Kante in eine zweite Bearbeitungsposition zur Bearbeitung einer oberen Kante verschwenkbar ist, wobei es sich bei der Schwenkachse bevorzugt um eine Stellachse handelt und/oder wobei bevorzugt verstellbare Anschläge zur Einstellung der ersten und der zweiten Bearbeitungsposition vorgesehen sind.

7. Vorrichtung nach einem der vorangegangen Ansprüche, wobei die Drehachse der zweiten Werkzeugaufnahme mit einer Ebene, welche senkrecht zur Drehachse der Werkstückaufnahme verläuft, in einem Winkel ausgerichtet und/oder ausrichtbar ist, welcher in einem Bereich zwischen +/- 55liegt, bevorzugt in einem Bereich zwischen +/- 45 und +/- 30 °.

8. Vorrichtung nach einem der vorangegangen Ansprüche, wobei die zweite Werkzeugspindel starr oder nur über eine oder mehrere Stellachsen an dem Bearbeitungskopf angeordnet ist, wobei bevorzugt zur Einstellung des Anfas-Winkels eine Verstellanordnung zur Verstellung einer Winkelstellung der Drehachse der zweiten Werkzeugaufnahme relativ zum Bearbeitungskopf vorgesehen ist, oder wobei die zweite Werkzeugspindel über mindestens eine NC-Achse, insbesondere eine Schwenkachse, an dem Bearbeitungskopf angeordnet ist, und/oder wobei die die Drehachse der zweiten Werkzeugaufnahme pneumatisch, hydraulisch, und/oder elektrisch antreibbar ist.

9. Vorrichtung nach einem der vorangegangen Ansprüche, wobei mehrere erste Anfasfräser gemeinsam an einem Dorn an der ersten Werkzeugaufnahme aufnehmbar sind und die Vorrichtung eine Steuerung aufweist, durch welche mehrere erste Kanten durch die ersten Anfasfräser anfasbearbeitbar sind.

10. Vorrichtung nach einem der vorangegangen Ansprüche, wobei zusammen mit dem mindestens einen ersten Anfasfräser eine Bürste an einem Dorn an der ersten Werkzeugaufnahme aufnehmbar ist und die Vorrichtung eine Steuerung aufweist, durch welche eine durch den ersten Anfasfräsers oder den Fingerfräser anfasbearbeitete Kante durch die Bürste entgratet werden kann, wofür bevorzugt der Bearbeitungskopf um eine Schwenkachse A verschwenkbar ist, welche senkrecht auf zur Drehachse der Werkstückaufnahme und senkrecht zur Drehachse der ersten Werkzeugaufnahme verläuft.

11. Vorrichtung nach einem der vorangegangen Ansprüche, mit einer Steuerung, welche die Erzeugung einer Fase nur in Teilbereichen der zweiten Kante und/oder die Bearbeitung von unterschiedlichen Teilbereichen der zweiten Kante mit unterschiedlichen Bereichen des Fingerfräsers, insbesondere mit einem Mantelbereich und einen Kopfbereich, erlaubt, insbesondere zur Anfasbearbeitung der Verzahnung einer Welle.

12. Vorrichtung nach einem der vorangegangenen Ansprüche, mit einer Steuerung zur Ansteuerung der Achsen der Vorrichtung zum automatischen Anfasen der Kanten der Verzahnung des Werkstücks, wobei die Steuerung so programmiert ist, dass eine erste Kante einer Verzahnung eines in der Werkstückaufnahme aufgenommenen Werkstücks über einen in der ersten Werkzeugaufnahme aufgenommenen Anfasfräser automatisch anfasbearbeitet werden kann, wobei es sich bei dem ersten Anfasfräser um ein scheibenförmiges Entgratwerkzeug, welches am Umfang Schneidzähne und Spahnnuten aufweist, handelt, und dass eine zweite Kante einer Verzahnung des in der Werkstückaufnahme aufgenommenen Werkstücks über einen in der zweiten Werkzeugaufnahme aufgenommenen Fingerfräser automatisch anfasbearbeitet werden kann, und/oder mit mindestens einem in der ersten Werkzeugaufnahme aufgenommenen Anfasfräser, insbesondere mit mindestens einem in der Werkzeugaufnahme aufgenommenen Chamfer-Cut-Fräser, und/oder mit einem in der zweiten Werkzeugaufnahme aufgenommenen Fingerfräser, und/oder wobei es sich bei der Vorrichtung um eine stand-alone Anfasmaschine oder eine in ein Verzahnbearbeitungszentrum integrierte Anfasmaschine handelt.

13. Verzahnbearbeitungszentrum mit einer Vorrichtung nach einem der vorangegangenen Ansprüche, einer Verzahnmaschine und einem Werkstückwechsler, wobei es sich bei der Verzahnmaschine insbesondere um eine Verzahnungsstoßmaschine oder eine Wälzschälmaschine oder eine Wälzfräsmaschine handelt, und/oder wobei die Verzahnbearbeitung und das Anfasen der Werkstücke taktzeit-parallel erfolgen, und/oder wobei es sich bei dem Werkstückwechsler um eine Ring-Automation handelt und die Vorrichtung nach einem der vorangegangenen Ansprüche und die Verzahnmaschine an unterschiedlichen Winkelpositionen der Ring-Automation angeordnet sind.

14. Verfahren zur Anfasbearbeitung mindestens zweier Kanten eines verzahnten Werkstücks, mittels einer Vorrichtung mit mindestens einer drehbar gelagerten Werkstückaufnahme zur Aufnahme des Werkstücks und einem über mindestens eine Bewegungsachse relativ zur Werkstückaufnahme bewegbaren Bearbeitungskopf, wobei an dem Bearbeitungskopf mindestens eine erste drehbar gelagerte Werkzeugaufnahme vorgesehen ist, wobei eine erste Kante einer Verzahnung eines in der Werkstückaufnahme aufgenommenen Werkstücks über einen in der ersten Werkzeugaufnahme aufgenommenen Anfasfräser anfasbearbeitet wird, wobei es sich bei dem ersten Anfasfräser um ein scheibenförmiges Entgratwerkzeug, welches am Umfang Schneidzähne und Spannuten aufweist, handelt,
**dadurch gekennzeichnet,**
**dass** an dem Bearbeitungskopf eine zweite Werkzeugspindel mit einer zweiten drehbar gelagerten Werkzeugaufnahme vorgesehen ist und die Anfasbearbeitung einer zweiten Kante einer Verzahnung des in der Werkstückaufnahme aufgenommenen Werkstücks über einen in der zweiten Werkzeugaufnahme aufgenommenen Fingerfräser erfolgt.

15. Verfahren nach Anspruch 14 zur Anfasbearbeitung eines Werkstücks mit einer Mehrfachverzahnung, wobei bevorzugt mindestens zwei Kanten der mehreren Verzahnungen durch einen oder mehrere in der ersten Werkzeugaufnahme aufgenommenen ersten Anfasfräser anfasbearbeitet werden und mindestens eine Kante einer Verzahnung durch den in der zweiten Werkzeugaufnahme aufgenommenen Fingerfräser anfasbearbeitet wird, und/oder zur Anfasbearbeitung der Kanten eines Werkstücks mit einer Innenverzahnung.

## Claims

1. An apparatus for chamfer-machining at least two edges of a toothed workpiece (7, 27), wherein the apparatus comprises at least one workpiece spindle with a rotatably mounted workpiece holder (4) for receiving the workpiece and a machining head (3) movable relative to the workpiece holder via at least one axis of movement, wherein on the machining head at least one first tool spindle with a first rotatably mounted tool holder (1) is provided, wherein the apparatus is configured such that at least one first edge (12, 13, 15) of a toothing (7a, 7b; 27a, 27c) of a workpiece received in the workpiece holder can be chamfer-machined by a chamfer milling cutter (6) received in the first tool holder, wherein the first chamfer milling cutter is a disk-shaped deburring tool that includes cutting teeth and flutes on its circumference, and wherein on the machining head a second tool spindle with a second rotatably mounted tool holder (2) is provided,
**characterized in**
**that** the apparatus is configured such that a second edge (14) of a toothing (7b; 27b) of a workpiece received in the workpiece holder can be chamfer-machined by an end milling cutter (8) received in the second tool holder.

2. The apparatus according to claim 1, wherein the workpiece holder and the first tool holder can be driven in a synchronized way for chamfering the first edge, wherein the workpiece holder and the first tool holder preferably can be driven by generating coupling and/or wherein the first chamfer milling tool preferably is a Chamfer Cut unit or a hob peeling tool.

3. The apparatus according to claim 1 or 2, wherein the at least one axis of movement is an NC axis, which for chamfer-machining the second edge can be actuated by a controller of the apparatus such that an end milling cutter received in the second tool holder is guided along the contour of the second edge to be machined, while the workpiece received in the workpiece holder rotates about its axis of rotation.

4. The apparatus according to any of the preceding claims, wherein the at least one axis of movement is at least one first linear axis X, via which the machining head is traversable in a direction perpendicular to the axis of rotation of the workpiece holder and perpendicular to the axis of rotation of the first tool holder, and/or at least one second linear axis Z, via which the machining head is traversable in a direction parallel to the axis of rotation of the workpiece holder, and/or wherein the machining head is pivotable about a pivot axis A that extends perpendicularly to the axis of rotation of the workpiece holder and perpendicularly to the axis of rotation of the first tool holder, and/or wherein the machining head is traversable via a third linear axis Y or V, which extends in a plane that is perpendicular to the first linear axis X.

5. The apparatus according to any of the preceding claims, wherein a threading sensor is arranged on the machining head, which can be used both for threading the first chamfer milling cutter for chamfer-machining the first edge and for threading the end milling cutter for chamfer-machining the second edge, wherein it preferably is a contactless threading sensor.

6. The apparatus according to any of the preceding claims, wherein the second tool spindle is arranged on the machining head via a pivot axis via which it is pivotable from a first machining position for machining a lower edge into a second machining position for machining an upper edge, wherein the pivot axis preferably is an adjustment axis and/or wherein preferably adjustable stops are provided for adjusting the first and the second machining position.

7. The apparatus according to any of the preceding claims, wherein the axis of rotation of the second tool holder is aligned and/or can be aligned with a plane that extends perpendicularly to the axis of rotation of the workpiece holder at an angle that lies in a range between +/- 55°, preferably in a range between +/- 45° and +/- 30°.

8. The apparatus according to any of the preceding claims, wherein the second tool spindle is rigidly arranged on the machining head or only via one or more adjustment axes, wherein for adjusting the chamfering angle an adjusting arrangement for adjusting an angular position of the axis of rotation of the second tool holder relative to the machining head preferably is provided, or wherein the second tool spindle is arranged on the machining head via at least one NC axis, in particular a pivot axis, and/or wherein the axis of rotation of the second tool holder can be driven pneumatically, hydraulically and/or electrically.

9. The apparatus according to any of the preceding claims, wherein a plurality of first chamfer milling cutters can jointly be received on a mandrel on the first tool holder and the apparatus includes a controller by which a plurality of first edges can be chamfer-machined by the first chamfer milling cutters.

10. The apparatus according to any of the preceding claims, wherein together with the at least one first chamfer milling cutter a brush can be received on a mandrel on the first tool holder and the apparatus includes a controller by which an edge chamfer-machined by the first chamfer milling cutter or the end milling cutter can be deburred by the brush, for which purpose the machining head preferably is pivotable about a pivot axis A that extends perpendicularly to the axis of rotation of the workpiece holder and perpendicularly to the axis of rotation of the first tool holder.

11. The apparatus according to any of the preceding claims, comprising a controller that allows the production of a chamfer only in partial areas of the second edge and/or the machining of different partial areas of the second edge with different areas of the end milling cutter, in particular with a shell area and a head area, in particular for chamfer-machining the toothing of a shaft.

12. The apparatus according to any of the preceding claims, comprising a controller for actuating the axes of the apparatus for automatically chamfering the edges of the toothing of the workpiece, wherein the controller is programmed such that a first edge of a toothing of the workpiece received in the workpiece holder can be automatically chamfer-machined by a chamfer milling cutter received in the first tool holder, wherein the first chamfer milling cutter is a disk-shaped deburring tool that includes cutting teeth and flutes on its circumference, and that a second edge of a toothing of a workpiece received in the workpiece holder can be automatically chamfer-machined by an end milling cutter received in the second tool holder and/or comprising at least one chamfer milling cutter received in the first tool holder, in particular comprising at least one Chamfer Cut unit received in the tool holder, and/or comprising an end milling cutter received in the second tool holder, and/or wherein the apparatus is a stand-alone chamfering machine or a chamfering machine integrated into a tooth-machining center.

13. A tooth-machining center comprising an apparatus according to any of the preceding claims, a gear cutting machine and a workpiece changer, wherein the gear cutting machine in particular is a gear shaping machine or a hob peeling machine or a hob grinding machine, and/or wherein the tooth-machining and the chamfering of the workpieces are effected at parallel cycle times, and/or wherein the workpiece changer is a ring automation and the apparatus according to any of the preceding claims and the gear cutting machine are arranged at different angular positions of the ring automation.

14. A method for chamfer-machining at least two edges of a toothed workpiece, by means of an apparatus comprising at least one rotatably mounted workpiece holder for receiving the workpiece and a machining head movable relative to the workpiece holder via at least one axis of movement, wherein on the machining head at least one first rotatably mounted tool holder is provided, wherein a first edge of a toothing of a workpiece received in the workpiece holder is chamfer-machined via a chamfer milling cutter received in the first tool holder, wherein the first chamfer milling cutter is a disk-shaped deburring tool that includes cutting teeth and flutes on its circumference, **characterized in**
**that** a second tool spindle with a second rotatably mounted tool holder is provided on the machining head and the chamfer-machining of a second edge of a toothing of the workpiece received in the workpiece holder is effected via an end milling cutter received in the second tool holder.

15. The method according to claim 14 for chamfer-machining a workpiece with a multiple toothing, wherein preferably at least two edges of the plurality of toothings are chamfer-machined by one or more first chamfer milling cutters received in the first tool holder and at least one edge of a toothing is chamfer-machined by the end milling cutter received in the second tool holder, and/or for chamfer-machining the edges of a workpiece with an internal toothing.

## Revendications

1. Dispositif de chanfreinage d'au moins deux bords d'une pièce (7, 27) dentée, dans lequel le dispositif comprend au moins une broche porte-pièce avec un logement de pièce (4) monté de manière à pouvoir tourner pour loger la pièce et une tête d'usinage (3) pouvant être déplacée par rapport au logement de pièce au-dessus d'au moins un axe de déplacement, dans lequel au moins une première broche porte-outil avec un premier logement d'outil (1) monté de manière à pouvoir tourner est prévue sur la tête d'usinage, dans lequel le dispositif est configuré de telle sorte qu'un premier bord (12, 13, 15) d'une denture (7a, 7b ; 27a, 27c) d'une pièce logée dans le logement de pièce peut être chanfreiné par l'intermédiaire d'une fraise de chanfreinage (6) logée dans le premier logement d'outil, dans lequel la première fraise de chanfreinage est un outil d'ébarbage en forme de disque, lequel présente sur la périphérie des dents tranchantes et des goujures, et dans lequel une deuxième broche porte-outil avec un deuxième logement d'outil (2) monté de manière à pouvoir tourner est prévue sur la tête d'usinage,
**caractérisé en ce que**
le dispositif est configuré de telle sorte qu'un deuxième bord (14) d'une denture (7b, 27b) de la pièce logée dans le logement d'outil peut être chanfreiné par l'intermédiaire d'une fraise à queue (8) logée dans le deuxième logement d'outil.

2. Dispositif selon la revendication 1, dans lequel le logement de pièce et le premier logement d'outil peuvent être entraînés de manière synchronisée pour chanfreiner le premier bord, dans lequel le logement de pièce et le premier logement d'outil peuvent être entraînés de manière préférée avec un couplage de laminage, et/ou dans lequel le premier outil de chanfreinage est de manière préférée une fraise de coupe de chanfrein ou un outil de taillage en développante.

3. Dispositif selon la revendication 1 ou 2, dans lequel l'au moins un axe de déplacement est un axe NC, lequel peut être actionné pour le chanfreinage du deuxième bord par une commande du dispositif de telle sorte qu'une fraise à queue logée dans le deuxième logement d'outil est guidée le long du contour du deuxième bord à usiner tandis que la pièce logée dans le logement de pièce tourne autour de son axe de rotation.

4. Dispositif selon l'une quelconque des revendications précédentes, dans lequel l'au moins un axe de déplacement est au moins un premier axe linéaire X, au-dessus duquel la tête d'usinage peut être déplacée dans une direction de manière perpendiculaire par rapport à l'axe de rotation du logement de pièce et de manière perpendiculaire par rapport à l'axe de rotation du premier logement d'outil, et/ou est au moins un deuxième axe linéaire Z, au-dessus duquel la tête d'usinage peut être déplacée dans une direction de manière parallèle par rapport à l'axe de rotation du logement de pièce, et/ou dans lequel la tête d'usinage peut être pivotée autour d'un axe de pivotement A, lequel s'étend de manière perpendiculaire par rapport à l'axe de rotation du logement de pièce et de manière perpendiculaire par rapport à l'axe de rotation du premier logement d'outil, et/ou dans lequel la tête d'usinage peut être déplacée au-dessus d'un troisième axe linéaire Y ou V, qui s'étend dans un plan qui est perpendiculaire au premier axe linéaire X.

5. Dispositif selon l'une quelconque des revendications précédentes, dans lequel est disposé sur la tête d'usinage un capteur d'enfilage, lequel peut être employé à la fois pour enfiler la première fraise de chanfreinage pour chanfreiner le premier bord et pour enfiler la fraise à queue pour chanfreiner le deuxième bord, dans lequel il est de manière préférée un capteur d'enfilage sans contact.

6. Dispositif selon l'une quelconque des revendications précédentes, dans lequel la deuxième broche porte-outil est disposée sur la tête d'usinage au-dessus d'un axe de pivotement, par l'intermédiaire duquel elle peut être pivotée depuis une première position d'usinage pour usiner un bord inférieur dans une deuxième position d'usinage pour usiner un bord supérieur, dans lequel l'axe de pivotement est de manière préférée un axe de réglage et/ou dans lequel de manière préférée des butées ajustables sont prévues pour régler la première et la deuxième position d'usinage.

7. Dispositif selon l'une quelconque des revendications précédentes, dans lequel l'axe de rotation du deuxième logement d'outil est orienté et/ou peut être orienté avec un plan, lequel s'étend de manière perpendiculaire par rapport à l'axe de rotation du logement de pièce, selon un angle, lequel se situe dans une plage entre ± 55, de manière préférée dans une plage entre ± 45 et ± 30°.

8. Dispositif selon l'une quelconque des revendications précédentes, dans lequel la deuxième broche porte-outil est disposée sur la tête d'usinage de manière rigide ou seulement au-dessus d'un ou de plusieurs axes de réglage, dans lequel un ensemble d'ajustement est prévu pour ajuster une position angulaire de l'axe de rotation du deuxième logement d'outil par rapport à la tête d'usinage de manière préférée pour régler l'angle de chanfreinage, ou dans lequel la deuxième broche porte-outil est disposée sur la tête d'usinage au-dessus d'au moins un axe NC, en particulier d'un axe de pivotement, et/ou dans lequel l'axe de rotation du deuxième logement d'outil peut être entraîné de manière pneumatique, hydraulique et/ou électrique.

9. Dispositif selon l'une quelconque des revendications précédentes, dans lequel plusieurs premières fraises de chanfreinage peuvent être logées conjointement sur un mandrin sur le premier logement d'outil et le dispositif présente une commande, par laquelle plusieurs premiers bords peuvent être chanfreinés par les premières fraises de chanfreinage.

10. Dispositif selon l'une quelconque des revendications précédentes, dans lequel une brosse peut être logée, conjointement avec l'au moins une première fraise de chanfreinage, sur un mandrin sur le premier logement d'outil et le dispositif présente une commande par laquelle un bord chanfreiné par la première fraise de chanfreinage ou la fraise à queue peut être ébarbé par la brosse, la tête d'usinage pouvant à cet effet de manière préférée être pivotée autour d'un axe de pivotement A, lequel s'étend de manière perpendiculaire à l'axe de rotation du logement de pièce et de manière perpendiculaire par rapport à l'axe de rotation du premier logement d'outil.

11. Dispositif selon l'une quelconque des revendications précédentes, avec une commande, laquelle permet la production d'un chanfrein seulement dans des zones partielles du deuxième bord et/ou l'usinage de différentes zones partielles du deuxième bord avec différentes zones de la fraise à queue, en particulier avec une zone enveloppante et une zone de tête, en particulier pour le chanfreinage de la denture d'un arbre.

12. Dispositif selon l'une quelconque des revendications précédentes, avec une commande pour piloter les axes du dispositif pour chanfreiner automatiquement les bords de la denture de la pièce, dans lequel la commande est programmée de telle sorte qu'un premier bord d'une denture d'une pièce logée dans le logement de pièce peut être chanfreiné automatiquement par l'intermédiaire d'une fraise de chanfreinage logée dans le premier logement d'outil, dans lequel la première fraise de chanfreinage est un outil d'ébarbage en forme de disque, lequel présente sur la périphérie des dents tranchantes et des goujures, et qu'un deuxième bord d'une denture de la pièce logée dans le logement de pièce peut être chanfreiné automatiquement par l'intermédiaire d'une fraise à queue logée dans le deuxième logement d'outil, et/ou avec au moins une fraise de chanfreinage logée dans le premier logement d'outil, en particulier avec au moins une fraise de coupe de chanfrein logée dans le logement d'outil, et/ou avec une fraise à queue logée dans le deuxième logement d'outil et/ou dans lequel le dispositif est une machine de chanfreinage indépendante ou une machine de chanfreinage intégrée dans un tour d'usinage de denture.

13. Tour d'usinage de denture avec un dispositif selon l'une quelconque des revendications précédentes, une machine à tailler les dentures et un changeur de pièce, dans lequel la machine à tailler les dentures est une mortaiseuse ou une machine de taillage en développante ou une machine à tailler par fraisemère, et/ou l'usinage de denture et le chanfreinage des pièces ont lieu en parallèle de manière cadencée, et/ou dans lequel le changeur de pièce est un système d'automatisation en boucle et le dispositif selon l'une quelconque des revendications précédentes et la machine pour tailler les dentures sont disposés sur différentes positions angulaires du système d'automatisation en boucle.

14. Procédé de chanfreinage d'au moins deux bords d'une pièce dentée au moyen d'un dispositif avec au moins un logement de pièce monté de manière à pouvoir tourner destiné à loger la pièce et une tête d'usinage pouvant être déplacée par rapport au logement de pièce sur au moins un axe de déplacement, dans lequel au moins un premier logement d'outil monté de manière à pouvoir tourner est prévu sur la tête d'usinage, dans lequel un premier bord d'une denture d'une pièce logée dans le logement de pièce est chanfreiné par l'intermédiaire d'une fraise de chanfreinage logée dans le premier logement d'outil, dans lequel la première fraise de chanfreinage est un outil d'ébarbage en forme de disque, lequel présente sur la périphérie des dents tranchantes et des goujures, **caractérisé en ce**
**qu'**une deuxième broche porte-outil avec un deuxième logement d'outil monté de manière à pouvoir tourner est prévue sur la tête d'usinage et le chanfreinage d'un deuxième bord d'une denture de la pièce logée dans le logement de pièce est effectué par l'intermédiaire d'une fraise à queue logée dans le deuxième logement d'outil.

15. Procédé selon la revendication 14 pour le chanfreinage d'une pièce avec une pluridenture, dans lequel de manière préférée au moins deux bords des plusieurs dentures sont chanfreinés par une ou plusieurs premières fraises de chanfreinage logées dans le premier logement d'outil et au moins un bord d'une denture est chanfreiné par la fraise à queue logée dans le deuxième logement d'outil, et/ou pour chanfreiner les bords d'une pièce avec une denture intérieure.
